# EUROPEAN PATENT SPECIFICATION

(11) **EP 1 954 995 B1**
(45) Date of publication and mention of the grant of the patent: **04.07.2018**
(21) Application number: 06824349.2
(22) Date of filing: 27.11.2006
(51) Int. Cl.: F25D 31/00, A23B 4/06, A23L 3/36, F25D 25/00

(54) **EMPTYING DEVICE FOR VERTICAL FREEZERS**
ENTLEERUNGSVORRICHTUNG FÜR VERTIKALE GEFRIERGERÄTE
DISPOSITIF DE VIDAGE POUR CONGELATEURS VERTICAUX

(30) Priority: 28.11.2005 NO 20055608
(43) Date of publication of application: 13.08.2008
(73) Proprietor: Optimar Giske AS, 6050 Valderøy (NO)
(72) Inventor: HAREIDE, Terje, N-6050 Hareid (NO)
(74) Representative: Olsen, Svein Arne
(86) International application number: PCT/NO2006/000433
(87) International publication number: WO 2007/067062

(56) References cited:
- EP-A1- 1 486 746
- WO-A1-03/021172
- DE-A1- 1 501 229
- GB-A- 2 076 513
- GB-A- 190 006 920
- US-A- 4 184 799
- US-A- 4 699 559

## Description

The present invention relates to an emptying device serving vertical freezers, particularly freezes for fast freezing (super chilling) of fish and other seafood products, according to claim 1.

This type of freezers is first and foremost intended for use onboard of fishing vessels, as for example factory trawlers, and comprises a freezer chamber for fast-freezing of for example fish in different block sizes. After the blocks having attained the desired core temperature, the freezer must be emptied and the blocks transported for storage onboard the ship. By the traditional way of emptying the freezer, the bottom of the freezer is lifted so that the blocks stand out over the edges of the freezer chamber. Possible partition plates between the blocks are removed by hand, and the blocks are lifted or pushed out by hand. The blocks are either placed on platform trucks or a transport system for further transport.

Different more or less automatic emptying systems exist on the market. One of the systems comprises a clamp which takes hold of one or more blocks when these have been lifted to their upper position. The clamp grips over the blocks and presses them together. The disadvantage with this solution is that the blocks have a tendency to freeze together and that the blocks are easily damaged, either by the very clamp or when the congealed blocks are to be separated from each other. The utilized claim is of the scissor type and has a small contact area with great local squeeze forces which far to often result in that the blocks are broken. In addition it is called for installation of rail systems on the lower surface of the above deck and a great deck height. Rail systems can also get in the way for the replacement band which usually is mounted over the freezers. In practice this system is not used as it is not practicable onboard a ship.

NO patent 312.791 granted to the present Applicant, relates to a device for emptying vertical freezers, comprising a pushing arm extending at right angles to the longitudinal axis of the freezer and which is movable along the freezer. The pushing arm is arranged to push blocks across the longitudinal axis of the freezer and onto a transport system which extends along the freezer. The pushing arm is arranged so that it can be translated along the freezer to reach each following block.

DE 1.501.229 pertains to an emptying device comprising a telescope arranged column and a lifting cylinder, wherein a so-called "gallow" or arm stand out over the freezer. The arm comprises a long rail onto which a number of heating rods has been mounted. Each heating rod is stuck into each own freezer chamber and is frozen firmly in the block, so that when the blocks are frozen, all the blocks can be lifted by means of the arm and the lifting cylinder, The lifting cylinder can be turned with all the blocks hanging down from the rail, and when the blocks hang over a transport band or similar, the heating rods are heated so that they loose their grip on the blocks. The lifting cylinder is then turned back again over the freezer, the rods are lowered back again down into the chambers, the chambers are filled up again and their contents are frozen as the lifting sequence is repeated again.

DE 1.501.229 is designed so that it requires large space, both for lifting a great member of blocks at a time and which hang down from the rail, and not the least during the turning movement of the lifting cylinder. The column shown in the said patent is fixedly arranged to the basis and can not serve a great member of freezers sequentially. The fact that the heating rods must be frozen firmly into the blocks indicates further that the column is not arranged for being moved along one or more freezers. An arrangement consisting of heating rods of the type shown in DE 1.501.229 will also not be suitable for freezing of fish, as the chambers will essentially be completely filled up and not give place for heating rods.

The document GB 06920 A A.D. 1900 discloses an emptying device for cargo ships.

The purpose of the present invention is to provide a device for emptying vertical freezers and which can also be used in connection with existing installations, which requires very little place, which can be moved so that the emptying device can be used for a member of freezers to reduce the investment cost per freezer, which permits an automatic collecting of so-called partition plates, and which permits a higher degree of automation of the whole process.

Such purpose is fulfilled by means of a device of the type stated above and which is characterized by the features stated in the characterizing part of the independent claim 1. Further advantageous features and embodiments are specified in the dependent claims.

In the following a detailed description of an embodiment of the present invention is given, with reference to the attached drawings, wherein:
Fig. 1 shows in perspective an example of an emptying device with a freezer;

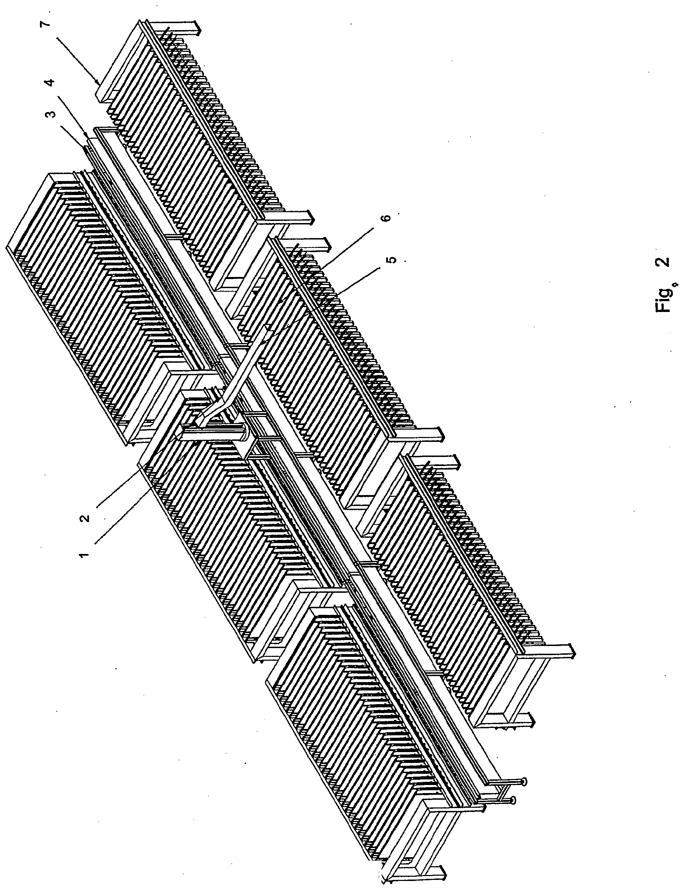

Fig. 2 shows in perspective an embodiment of the present invention comprising two rows with freezers arranged in parallel;

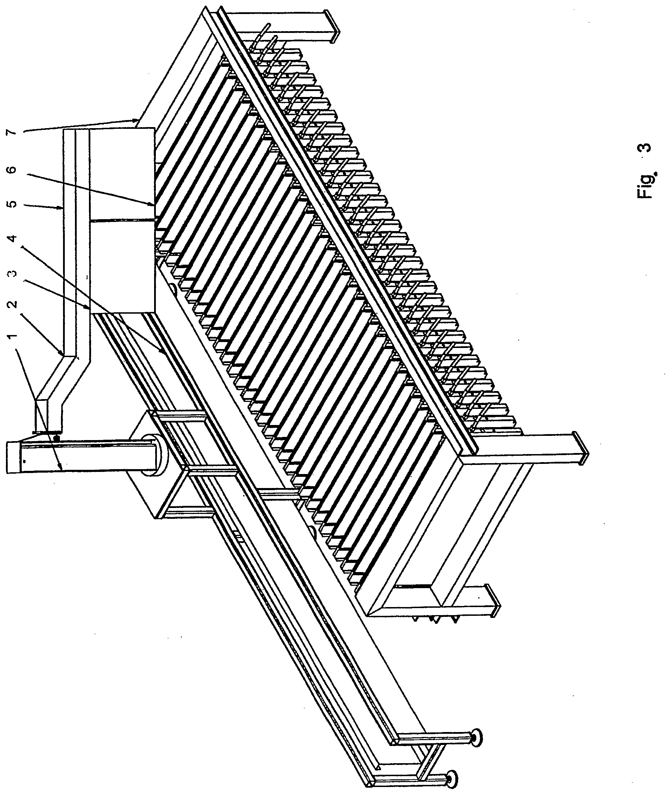

Fig. 3 is a perspective drawing which shows a gripping tool being on the point of transferring two blocks from the freezer to a transport system;

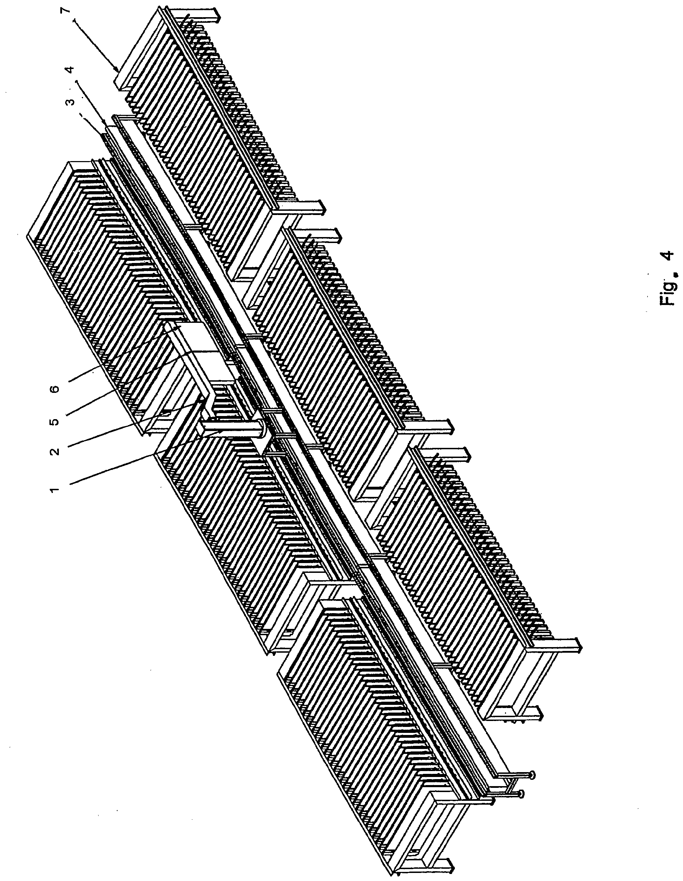

Fig. 4 is a perspective drawing showing the gripping tool on the point of positioning two blocks onto the transport system;
Fig. 5a, b show two cross sections where the blocks stand in a lowered and a lifted, respectively, position;
Fig. 6a, b show two cross sections of a freezer in a lowered and a lifted, respectively, position;
Fig. 7a, b show two cross sections of a freezer in a lowered and a lifted, respectively, position; and
Fig. 8a, b show two cross sections of a freezer in a lowered and a lifted, respectively position.

A transport system 4 is arranged between two rows of freezers 7. Rails or corresponding transfer system 3 are arranged along the transport system 4 along which a lifting means 1, 2, 5 can move. The emptying device comprises a lifting arm 2 and a gripping tool 5 arranged for gripping hold of one or more blocks 12. The emptying device is arranged so that picked blocks 12 can pass the emptying device on the transport system 4 without any parts of the emptying device coming in the way of the blocks 12 being transported along the transport system 4.

The lifting arm 2 can preferably rotate 360° and thereby reach both rows of freezers 7. In addition can the emptying device work quite close to a wall or other hindrances, as for example bulk heads, beams pipe trenches or similar. The lifting arm 2 can, however, rotate less than 360° and still utilize advantages of the invention. If the lifting arm 2 can only rotate ca 180°, the emptying device will still be able to empty two parallel rows of freezers 7 in a satisfactory way.

The transport system 4 can comprise an endless band, wheel or all other suitable systems arranged to convey objects 12 of the type in question.

The gripping tool 5 is arranged so that it gently takes hold of the blocks 12 without causing any damage to them. The contact area is large and the gripping forces are distributed over a large area of the blocks 12.

In a preferred embodiment the gripping tool 5 comprises two or more gripping areas or plates which substantially parallel clamp together around the block(s) 12.

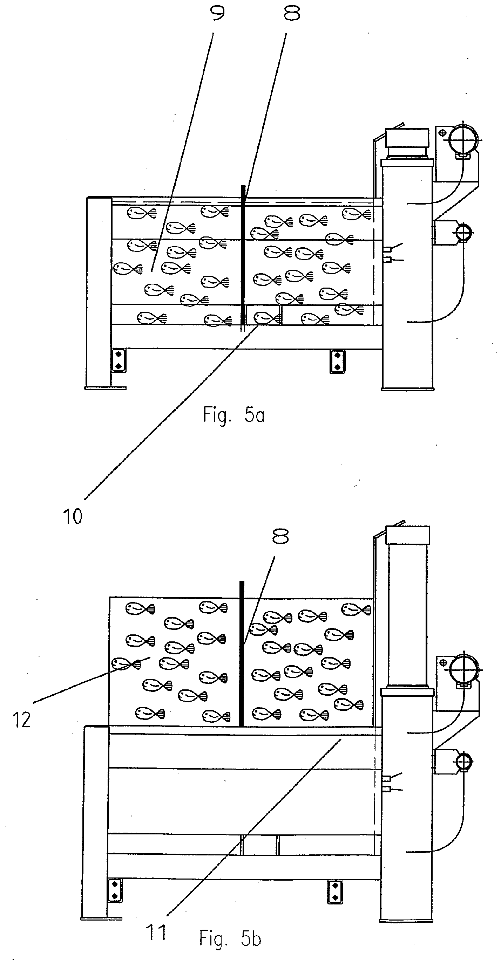

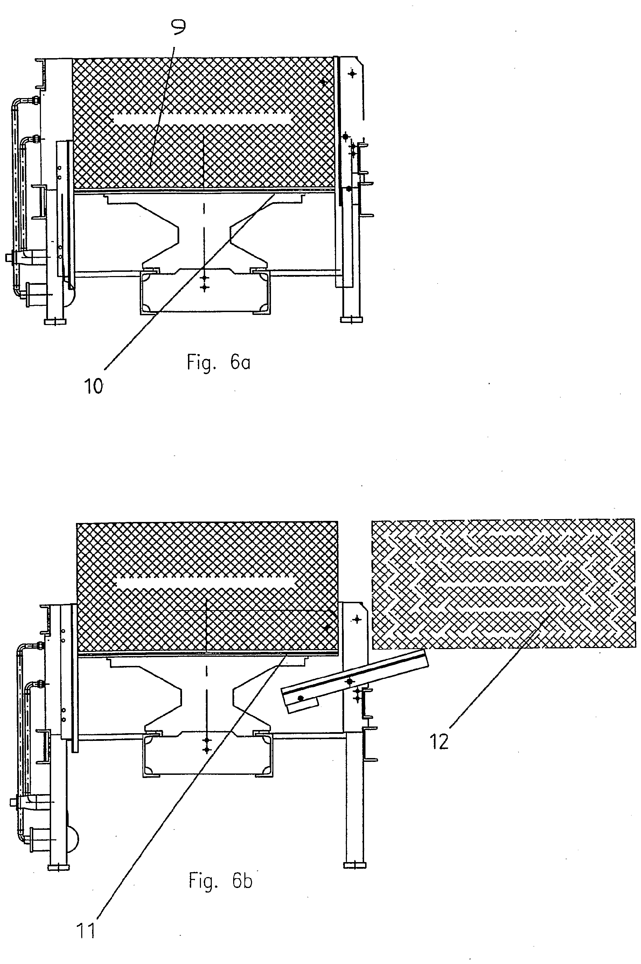

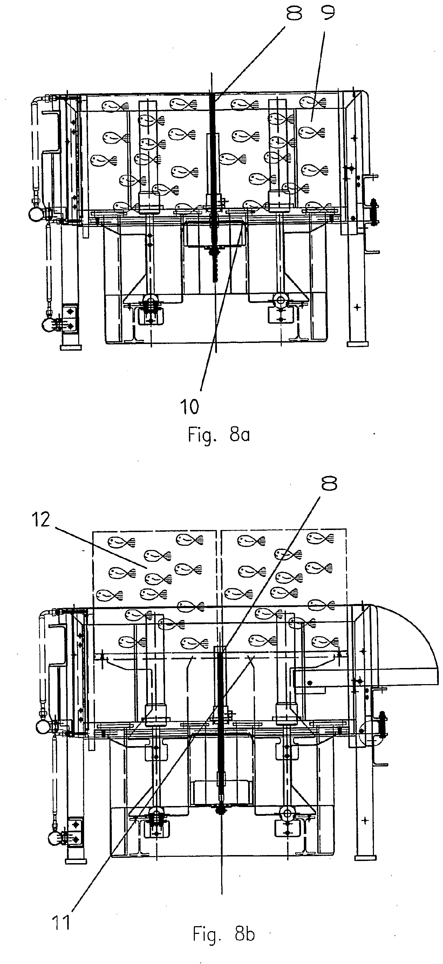

In each freezer chamber, below each block 12 is a lift- or lowerable bottom 10, 11 coupled to lifting- and lowering mechanisms. When the freezing of filled freezer chambers is completed, the block(s) which is/are to be taken out of the freezer, is/are lifted up to sufficient height so that the gripping tool 5 can achieve sufficiently good hold of the block(s) 12. This height is dependent on the type of freezer, the character of the block, available place, the movements of the boat etc. Different types of freezers which can be used in connection with the present invention are shown in figs 5a, b, 6a, b and 8a, b. It is to be understood that other types of freezers could likewise be used in connection with the present invention.

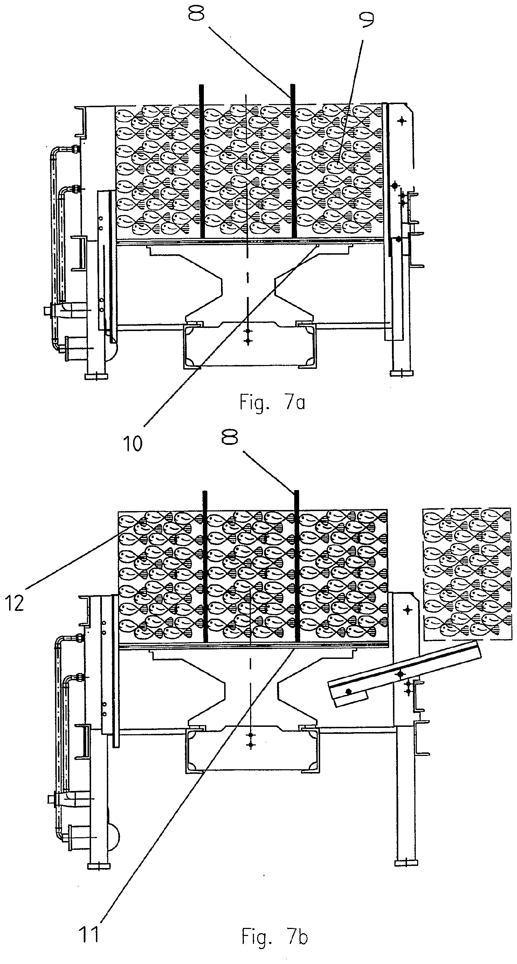

Each room in the freezer 7 can also be provided with separation plates for therewith to form smaller blocks, sometimes named half blocks. This is specially clearly in figs. 5a, b and 7a, b. If the separation plates are not used, whole blocks will be formed.

When the block 12 to be moved has been sufficiently lifted up from the freezer and the emptying device has been placed in the correct position in relation to the block, the gripping tool 5 takes hold of the block and lifts it sufficiently high up to that the block goes clear of the freezer 7. The lifting arm 2 is then turned so that the block can be lowered and placed onto the transport system 4, which conveys the block further to it next destination. The lifting arm 2 and the gripping tool 5 can according to a preferred embodiment be folded together or laid down so that specially low hindrances, as for example pipe trenches or similar, can be traversed.

The height of the separation plates 8 effects to that these protrude a little over the blocks, and if these are used, the gripping tool 5 can be adapted so that the blocks 12 and the separation plates 8 can be dropped independently of each other. Thereby can the gripping tool 5 firstly let the hold go on the half block(s) and then drop the separation plate(s) 8 at a later point of time, which enables the collecting of the separation plates 8 in a suitable container.

The emptying device continues then to the next station or block 12, where the lifting arm 2 and the gripping tool 5 are positioned in relation to the next block 12 which is to be removed from the freezer 7 and so on until the whole freezer has been emptied. The emptying device can serve two parallel freezers 7 simultaneously thereby that the lifting arm 2 is turned to-and-from 180° between each freezer 7 on each side of the emptying device.

The emptying device is then driven to the next freezer 7 where the same emptying cyclus is carried out. The emptying device is driven from freezer 7 to freezer 7 by means of rail means or similar guiding organs 3 which according to a preferred embodiment form a unit together with the transport system. This saves space and gives a simplified system as to construction, assembling, energy supply, etc.

Accordingly to an alternative embodiment of the invention, the gripping tool 5 is also rotatable arranged in relation to the lifting arm 2.The lifting arm 2 can according to a further embodiment also be telescopic. Thereby can the emptying device reach blocks 12 which are situated in freezer positions which otherwise would be difficult or impossible to reach.

The emptying device is preferably constructed so that the overall height is to be so low as possible and thus can be operated with the lowest possible height over the freezer(s) 7. This increases the space utilization onboard a ship and increases also the member of ships which can be provided with such equipment.

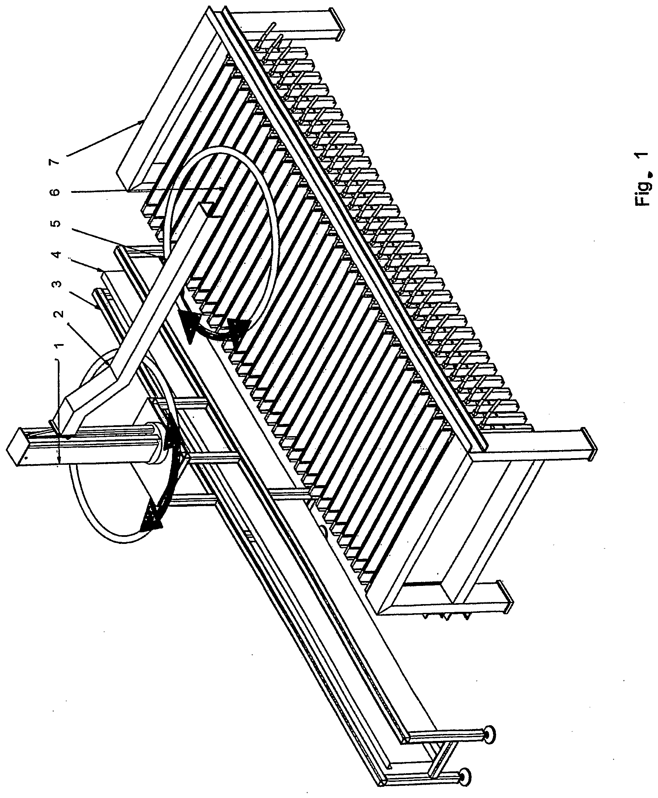

According to one embodiment of the present invention, the emptying device comprises a tower 1 in relation to which the lifting arm 2 can be lifted or lowered. Such construction is for example shown in fig. 1. The tower 1 can be turned 360° in relation to a basis, the basis being provided with means which function to that the emptying device can be moved along the said guiding organs 4. It is understood that such tower 1 is not necessary to achieve the present invention. A lifting arm 2 which is vertically rotatable in relation to the basis could in some instances be considered to function just as well, particularly in consideration of construction height and accessibility under pipe trenches etc. Articulated embodiment similar to a digger could also be considered.

The guiding organs 3, the freezer 7 and/or the emptying device can comprise mechanical, electrical, magnetic or visual reference points used to position the emptying device in relation to the freezers 7. A guiding system controls the blocks 12, the positions, the separation plates 8, the movements of the transport system, etc., for thereby to optimize the emptying process.

## Claims

1. Emptying device serving vertical freezers (7), particularly freezers of fast freezing (super chilling) of fish and other seafood products, and comprising:
two rows of vertical freezers (7), each having a number of vertically arranged freezer plates between which freezer chambers are defined for freezing of blocks (12); a transport system (4) extending along the freezers (7);
a lifting arm (2), wherein the lifting arm (2) can be turned at least 180° about an essentially vertical axis such that the emptying device is able to empty two parallel rows of freezers (7), and wherein a gripping tool (5) is arranged on the lifting arm (2), **characterized in that** the lifting arm (2) by means of guiding organs (3) is adapted to move along the freezers (7) along the transport system (4), wherein the emptying device can serve two freezers (7) simultaneously, wherein the respective ones of the two freezers are arranged on each side of the emptying device.

2. Emptying device according to claim 1,
**characterized in that** the gripping tool (5) can be rotated essentially horizontally in relation to the lifting arm (2).

3. Emptying device according to claim 1,
**characterized in that** the lifting arm (2) can rotate at least 360° about an essentially vertical axis.

4. Emptying device according to claim 1,
**characterized in that** the lifting arm (2) extends on rails (3) along the transport system (4).

5. Emptying device according to one of the foregoing claims,
**characterized in that** the gripping tool (5) is provided with organs adapted for manipulating of possible separation plates (8) simultaneously with but never the less independently of the blocks (12).

6. Emptying device according to one of the foregoing claims,
**characterized in that** the lifting arm (2) can be folded together for thereby to achieve a smaller height.

## Patentansprüche

1. Entleerungsvorrichtung für vertikale Gefriergeräte (7), insbesondere Gefriergeräte zum schnellen Einfrieren (Super Chilling) von Fisch und anderen Meeresprodukten, umfassend:
zwei Reihen vertikaler Gefriergeräte, deren jede eine Anzahl vertikal angeordneter Gefrierplatten aufweist, zwischen denen Gefrierkammern zum Gefrieren von Blöcken (12) begrenzt sind; ein Transportsystem (4), das sich entlang der Gefriergeräte (7) erstreckt; einen Hubarm (2) wobei der Hubarm (2) um mindestens 180° um eine im Wesentlichen vertikale Achse gedreht werden kann, so dass die Entleerungsvorrichtung geeignet ist, zwei parallele Reihen von Gefriergeräten (7) zu entleeren,
und wobei ein Greifwerkzeug (5) an dem Hubarm (2) angeordnet ist, **dadurch gekennzeichnet, dass** der Hubarm (2) mittels Führungsorganen (3) dazu ausgelegt ist, sich entlang der Gefriergeräte (7) entlang des Transportsystems (4) zu bewegen, wobei die Entleerungsvorrichtung zwei Gefriergeräte (7) gleichzeitig bedienen kann, wobei jeweils eines der zwei Gefriergeräte zu jeder Seite der Entleerungsvorrichtung angeordnet ist.

2. Entleerungsvorrichtung nach Anspruch 1,
**dadurch gekennzeichnet, dass** das Greifwerkzeug (5) im Verhältnis zum Hubarm (2) im Wesentlichen horizontal drehbar ist.

3. Entleerungsvorrichtung nach Anspruch 1,
**dadurch gekennzeichnet, dass** der Hubarm (2) um mindestens 360° um eine im Wesentlichen vertikale Achse drehen kann.

4. Entleerungsvorrichtung nach Anspruch 1,
**dadurch gekennzeichnet, dass** sich der Hubarm (2) auf Schienen (3) entlang des Transportsystems (4) erstreckt.

5. Entleerungsvorrichtung nach einem der vorhergehenden Ansprüche, **dadurch gekennzeichnet, dass** das Greifwerkzeug (5) mit Organen versehen ist, die zur Handhabung allfälliger Trennplatten (8) gleichzeitig mit, jedoch unabhängig von den Blöcken (12) ausgebildet sind.

6. Entleerungsvorrichtung nach einem der vorhergehenden Ansprüche, **dadurch gekennzeichnet, dass** der Hubarm (2) zusammenklappbar ist, um dadurch eine geringere Höhe zu erreichen.

## Revendications

1. Dispositif de vidage desservant des congélateurs verticaux (7), notamment des congélateurs permettant la congélation rapide (super-réfrigération) de poissons et d'autres fruits de mer, et comprenant :
deux rangées de congélateurs verticaux (7), chacun ayant un certain nombre de plaques de congélation disposées verticalement entre lesquelles des chambres de congélation sont définies pour congeler des blocs (12) ; un système de transport (4) s'étendant le long des congélateurs (7) ;
un bras de levage (2), le bras de levage (2) pouvant être tourné d'au moins 180° sur un axe sensiblement vertical de sorte que le dispositif de vidage est capable de vider deux rangées parallèles de congélateurs (7), et un outil de préhension (5) étant disposé sur le bras de levage (2), **caractérisé en ce que** le bras de levage (2), au moyen d'organes de guidage (3), est conçu pour se déplacer le long des congélateurs (7) le long du système de transport (4), le dispositif de vidage pouvant desservir deux congélateurs (7) simultanément, les congélateurs respectifs parmi les deux congélateurs étant disposés de chaque côté du dispositif de vidage.

2. Dispositif de vidage selon la revendication 1, **caractérisé en ce que** l'outil de préhension (5) peut être tourné sensiblement horizontalement par rapport au bras de levage (2).

3. Dispositif de vidage selon la revendication 1, **caractérisé en ce que** le bras de levage (2) peut tourner d'au moins 360° sur un axe sensiblement vertical.

4. Dispositif de vidage selon la revendication 1, **caractérisé en ce que** le bras de levage (2) s'étend sur des rails (3) le long du système de transport (4).

5. Dispositif de vidage selon l'une des revendications précédentes, **caractérisé en ce que** l'outil de préhension (5) est pourvu d'organes conçus pour manipuler d'éventuelles plaques de séparation (8) simultanément avec des blocs (12), mais néanmoins indépendamment de ceux-ci.

6. Dispositif de vidage selon l'une des revendications précédentes, **caractérisé en ce que** le bras de levage (2) peut être replié pour atteindre ainsi une plus faible hauteur.
